# DEMANDE DE BREVET EUROPEEN

(11) **EP 4 459 074 A1**
(43) Date de publication de la demande: **06.11.2024**
(21) Numéro de dépôt: 24173555.4
(22) Date de dépôt: 30.04.2024
(51) Int. Cl.: E04H 1/12, E04H 6/02, E04H 6/04, H02S 20/10, F24S 25/12, E04H 6/00

(54) **PROCÉDÉ DE MONTAGE D'UN ABRI, NOTAMMENT UN ABRI POUR VOITURE**

(30) Priorité: 03.05.2023 FR 2304432
(71) Demandeur: AZENCO GROUPE, 31220 Cazeres (FR)
(72) Inventeur: Pouthe, Christophe, 31260 MONTSAUNES (FR)
(74) Mandataire: Lavoix

(57) **Abrégé**

L'abri (10) comporte au moins un panneau (20) et au moins un support (12) pour le panneau (20). Chaque support (12) comprend des premier (14) et second (16) montants, et un longeron (18) porté par les montants (14, 16) et portant le panneau (20). Le procédé de montage comporte, pour chaque support (12), les étapes suivantes : une étape de fixation du premier montant (14) de ce support (12) au sol (26) ; une étape de liaison du longeron (18) de ce support (12) au premier montant (14) correspondant, par une liaison pivot (32) ; une étape de pivotement du longeron (18) autour de la liaison pivot (32), jusqu'à ce que le longeron (18) forme un angle prédéterminé avec le premier montant (14) correspondant ; une étape de fixation du second montant (16) de ce support au sol (26) ; et une étape de fixation du second montant (16) au longeron (18).

## Description

La présente invention concerne un abri, notamment un abri pour voiture.

L'abri est par exemple une « ombrière », c'est à dire une structure destinée à fournir de l'ombre. L'abri peut être également destiné à protéger de la pluie.

Un tel abri comporte généralement au moins un support portant au moins un panneau (ou assemblage de panneaux) horizontal ou oblique en hauteur, afin de fournir de l'ombre sous ce panneau.

On notera que, dans l'état de la technique, un tel abri est généralement complexe à monter, nécessitant généralement l'utilisation d'une grue.

L'invention a notamment pour but de faciliter le montage d'un abri, en particulier de sorte qu'il ne nécessite pas l'utilisation d'une grue.

A cet effet, l'invention a notamment pour objet un procédé de montage d'un abri comportant au moins un panneau et au moins un support pour le panneau, caractérisé en ce que chaque support comprend des premier et second montants, et un longeron porté par les montants et portant le panneau, le procédé de montage comportant, pour chaque support, les étapes suivantes :
- une étape de fixation du premier montant de ce support au sol,
- une étape de liaison du longeron de ce support au premier montant correspondant, par une liaison pivot,
- une étape de pivotement du longeron autour de la liaison pivot, jusqu'à ce que le longeron forme un angle prédéterminé avec le premier montant correspondant,
- une étape de fixation du second montant de ce support au sol,
- une étape de fixation du second montant au longeron.

Un tel procédé de montage ne nécessite pas de grue, et peut être implémenté par deux personnes seulement, à savoir l'une qui manoeuvre le longeron pendant que l'autre effectue les fixations.

Suivant d'autres aspects avantageux de l'invention, le procédé de montage comprend une ou plusieurs des caractéristiques suivantes, prises isolément ou suivant toutes les combinaisons techniquement possibles :
- La fixation au sol comporte la formation de trous dans le sol pour le coulage de blocs de béton, et l'agencement d'élément de fixation noyés dans le béton en laissant une partie émergée pour la fixation d'une platine à chaque bloc de béton, les premier et second montants de chaque support étant solidarisés à la platine correspondante.
- Chaque élément de fixation est une tige filetée, destinée à passer au travers d'ouvertures de passage ménagées dans la platine, et à recevoir un écrou de serrage.
- La liaison pivot est formée par un boulon non serré passant à travers des orifices complémentaires prévus dans le longeron et le premier montant.
- Le longeron est fixé à chaque montant par une pluralité de boulons.

Différents aspects et avantages de l'invention seront mis en lumière dans la description qui va suivre, donnée uniquement à titre d'exemple non limitatif, et faite en référence aux dessins dans lesquels :

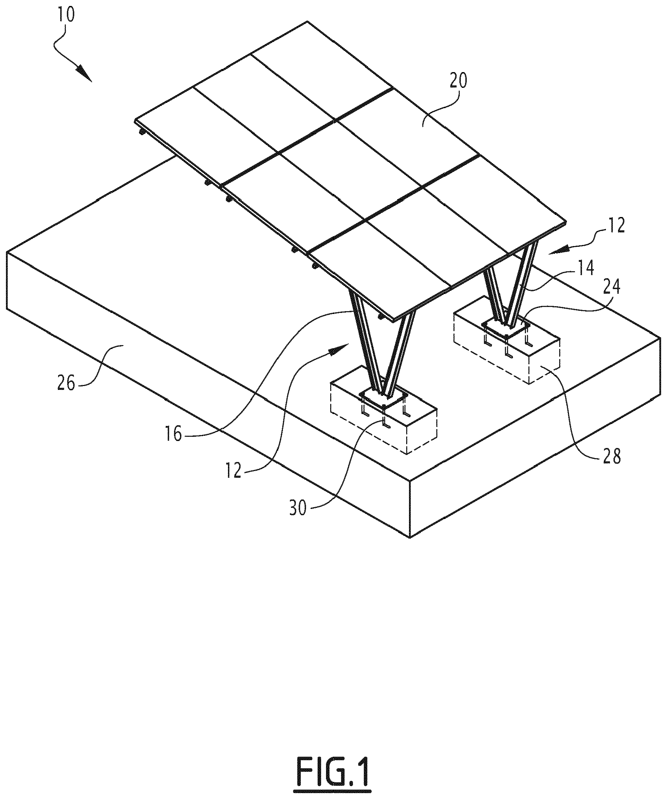

[Fig 1] la figure 1 est une vue en perspective d'un abri monté à l'aide d'un procédé de montage selon un exemple de mode de réalisation de l'invention ;

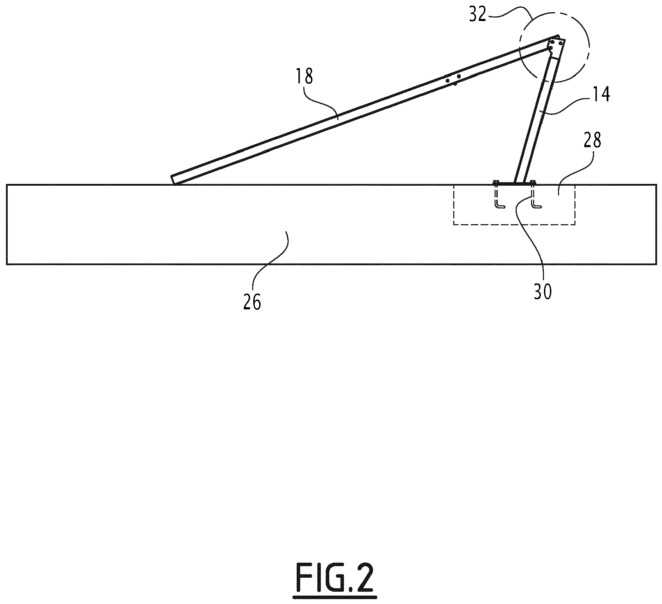

[Fig 2] la figure 2 est une vue de profil de l'abri au cours d'une étape de montage ;

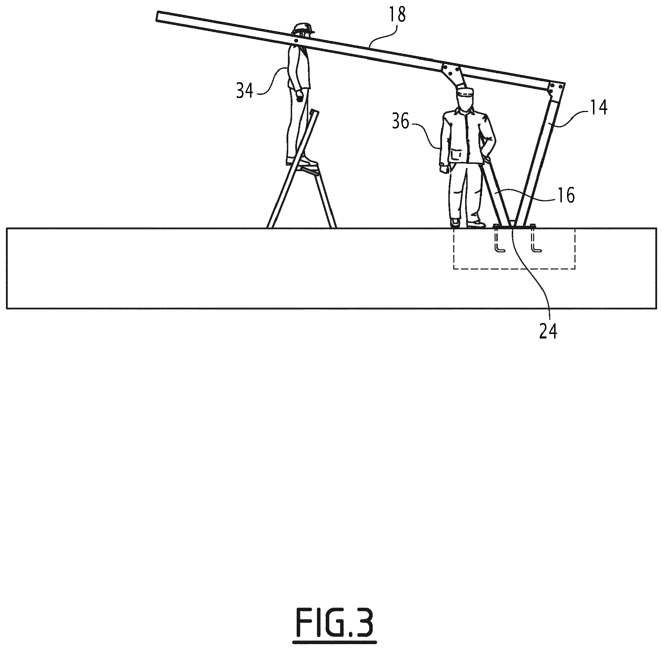

[Fig 3] la figure 3 est une vue de profil de l'abri au cours d'une étape ultérieure de montage ;
[Fig 4] la figure 4 est une en perspective de l'abri au cours d'une étape ultérieure de montage.

On a représenté, sur les figures, un abri 10, notamment destiné à former une ombrière pour voiture. L'abri est également apte à protéger la voiture de la pluie.

L'abri 10 comporte au moins un support 12, de préférence deux supports 12. Les supports 12 étant identiques, un seul sera décrit en détail, la description de l'un s'appliquant à l'identique à l'autre.

Chaque support 12 comporte un premier montant 14, un second montant 16, et un longeron 18 porté par les premier 14 et second 16 montants.

Les longerons 18 portent au moins un panneau 20, par exemple un assemblage de panneaux. Plus particulièrement, les longerons 18 portent des traverses 22 étendues entre les longerons 18 et portant les panneaux 20.

Les premier 14 et second 16 montants sont solidarisés à une platine 24 destinée à être fixée à un sol 26. A cet effet, le sol 26 comporte, pour chaque support 12, un bloc de béton 28, comprenant des organes de fixation 30 partiellement noyés dans le béton. Les organes de fixation 30 sont par exemple des tiges filetées. Par exemple, le bloc de béton 28 comporte quatre tiges 30.

Chaque platine 24 comporte un orifice de passage pour chaque tige filetée 30 du bloc de béton 28 correspondant, la fixation de la platine 24 étant dans ce cas assurée par des écrous vissés sur les tiges filetées 30 respectives.

Un procédé de montage de l'abri 10 va maintenant être décrit en références aux figures.

Au cours d'une première étape, les fondations de l'abri 10 sont réalisées, notamment par la formation de trous dans le sol 26 pour le coulage des blocs de béton 28. Les tiges 30 sont noyées dans le béton au cours de cette étape, en laissant une partie émergée pour recevoir ultérieurement des écrous.

Le procédé comporte ensuite une étape de fixation de chaque platine 24 au bloc de béton 28 respectif. La platine 24 est à cet effet munie d'ouvertures de passage des tiges 30, et elle est ainsi enfilée sur ces tiges 30. Des écrous sont ensuite vissés sur les tiges filetées pour maintenir la platine 24 fixée sur le bloc de béton 28.

La platine 24 est à ce stade solidaire du premier montant 14, ou le premier montant 14 est en variante solidarisé à la platine 24 après la fixation de la platine 24.

Le premier montant 14 est solidarisé à la platine 24 à son extrémité basse.

Le procédé comporte ensuite une étape de liaison de chaque traverse 18 à une extrémité haute du premier montant 14, par une liaison pivot 32. La liaison pivot 32 est par exemple formée par un boulon non serré passant à travers des orifices complémentaires prévus dans le longeron 18 et le premier montant 14. Le longeron 18 peut ainsi être manipulé en rotation autour de la liaison pivot 32.

Le procédé de montage comporte donc le pivotement du longeron 18 autour de la liaison pivot 32 jusqu'à former un angle souhaité avec le premier montant 14. Ce pivotement peut être réaliser par un premier ouvrier 34.

Le procédé de montage comporte ensuite la fixation du longeron 18 en position, au moyen du second montant 16. Le second montant 16 est solidarisé, à son extrémité inférieure, à la platine 24, et à son extrémité supérieure au longeron 18.

Le longeron 18 est par exemple fixé au second montant 16 au moyens de boulons traversant des orifices prévus à cet effet dans le longeron 18 et dans le second montant 16. Cette fixation est par exemple réalisée par un second ouvrier 36.

Le longeron 18 se retrouve ainsi fixé en deux points, d'une part au premier montant 14, et d'autre part au second montant 16, si bien qu'il se retrouve verrouillé angulairement, son pivotement n'étant plus autorisé.

Avantageusement, le longeron 18 est fixé à chacun des premier 14 et second montant 16 par plusieurs boulons. Les boulons supplémentaires de fixation au premier montant 14 sont donc ajoutés après fixation du longeron 18 au second montant 16, afin de renforcer les liaisons entre le longeron 18 et les montants 14, 16.

L'autre longeron est monté de la même façon que le longeron précédemment décrit.

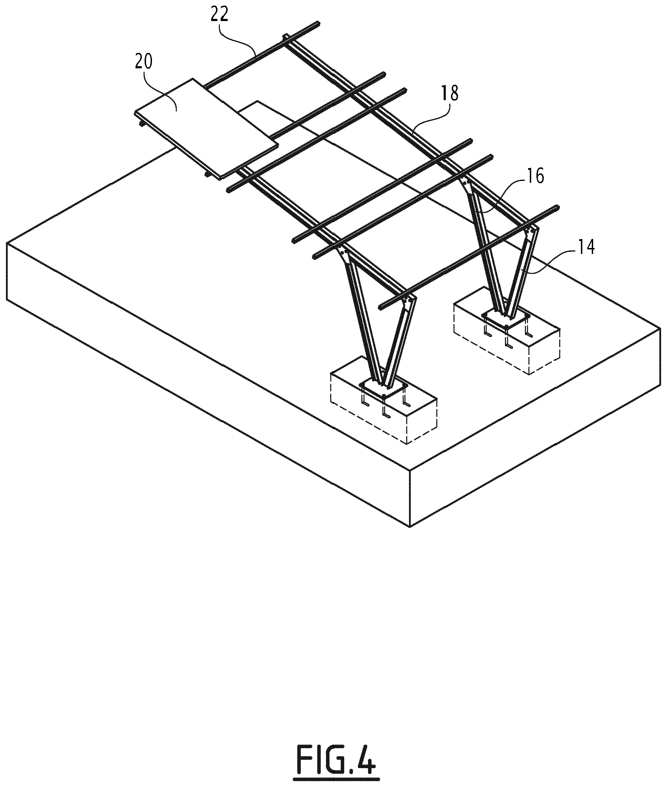

Une fois les deux longerons 18 montés, ceux-ci sont équipés de crochets pour recevoir les traverses 22. Les traverses 22 sont ainsi montées sur les longerons 18, comme cela est visible sur la figure 4.

Les traverses 22 sont destinées à recevoir les panneaux 20, qui sont ainsi montés sur les traverses 22 de manière connue en soi. Chaque panneau 20 est porté par deux traverses 22. Chaque paire de traverses 22 porte ainsi par exemple trois panneaux 20.

Il apparait clairement que l'invention permet de monter aisément l'abri 10, sans nécessiter l'utilisation d'une grue : seuls les ouvriers 34, 36 sont nécessaires au montage.

## Revendications

1. Procédé de montage d'un abri (10) comportant au moins un panneau (20) et au moins un support (12) pour le panneau (20), **caractérisé en ce que** chaque support (12) comprend des premier (14) et second (16) montants, et un longeron (18) porté par les montants (14, 16) et portant le panneau (20), le procédé de montage comportant, pour chaque support (12), les étapes suivantes :
- une étape de fixation du premier montant (14) de ce support (12) au sol (26),
- une étape de liaison du longeron (18) de ce support (12) au premier montant (14) correspondant, par une liaison pivot (32),
- une étape de pivotement du longeron (18) autour de la liaison pivot (32), jusqu'à ce que le longeron (18) forme un angle prédéterminé avec le premier montant (14) correspondant,
- une étape de fixation du second montant (16) de ce support au sol (26),
- une étape de fixation du second montant (16) au longeron (18).

2. Procédé de montage selon la revendication 1, dans lequel la fixation au sol comporte la formation de trous dans le sol (26) pour le coulage de blocs de béton (28), et l'agencement d'élément de fixation (30) noyés dans le béton en laissant une partie émergée pour la fixation d'une platine (24) à chaque bloc de béton (28), les premier (14) et second (16) montants de chaque support (12) étant solidarisés à la platine (24) correspondante.

3. Procédé de montage selon la revendication 2, dans lequel chaque élément de fixation (30) est une tige filetée, destinée à passer au travers d'ouvertures de passage ménagées dans la platine (24), et à recevoir un écrou de serrage.

4. Procédé de montage selon l'une quelconque des revendications précédentes, dans lequel la liaison pivot (32) est formée par un boulon non serré passant à travers des orifices complémentaires prévus dans le longeron (18) et le premier montant (14).

5. Procédé de montage selon l'une quelconque des revendications précédentes, dans lequel le longeron (18) est fixé à chaque montant (14, 16) par une pluralité de boulons.
